# EUROPÄISCHE PATENTSCHRIFT

(11) **EP 4 204 672 B1**
(45) Veröffentlichungstag und Bekanntmachung des Hinweises auf die Patenterteilung: **18.09.2024**
(21) Anmeldenummer: 21770131.7
(22) Anmeldetag: 24.08.2021
(51) Int. Cl.: F02K 9/42, C06D 5/04, F02K 9/52, F02K 9/95, F02K 9/94

(54) **HEISSGASERZEUGUNGSVORRICHTUNG MIT MONERGOLEM IONISCHEN TREIBSTOFF UND NIEDERSPANNUNGSANZÜNDUNG**
HOT-GAS-GENERATING APPARATUS WITH IONIC MONOPROPELLANT AND LOW-VOLTAGE IGNITION
DISPOSITIF DE PRODUCTION DE GAZ TRÈS CHAUD AVEC UN CARBURANT MONERGOL IONIQUE ET ALLUMAGE BASSE TENSION

(30) Priorität: 26.08.2020 DE 102020122337
(43) Veröffentlichungstag der Anmeldung: 05.07.2023
(73) Patentinhaber: Laborbital GmbH, 85452 Moosinning (DE); Nobbe, Saverio, 81737 München (DE)
(72) Erfinder: NOBBE, Saverio, 81737 München (DE)
(74) Vertreter: Müller Hoffmann & Partner
(86) Internationale Anmeldenummer: PCT/EP2021/073394
(87) Internationale Veröffentlichungsnummer: WO 2022/043327

(56) Entgegenhaltungen:
- US-A1- 2010 005 779
- US-A1- 2010 107 601
- US-A1- 2013 305 685
- US-A1- 2015 059 314
- US-A1- 2015 299 063

## Beschreibung

### Kurzfassung

Es wird eine Heißgaserzeugungsvorrichtung vorgeschlagen, welche insbesondere für den Einsatz in der Luft- und Raumfahrt optimiert ist und sowohl Anzündung als auch die stabile Verbrennung flüssiger, ionischer Treibstoffe ermöglicht. Die Treibstoffe sind im Wesentlichen frei von flüchtigen Lösungsmitteln (z.B. Wasser) und können dank ihres vernachlässigbaren Dampfdrucks auch unter Vakuumbedingungen angezündet werden. Die Anzündung erfolgt dabei durch temporäres Anlegen einer niedrigen Spannung an die im Injektor befindlichen Elektroden. Der spezielle Aufbau des selbsttätig verschließenden Injektors, verhindert einen Rückschlag der Flammenfront stromaufwärts des Einspritzkopfes.

### Stand der Technik

Die Erfindung umfasst eine Heißgaserzeugungsvorrichtung mit elektrischer Anzündung monergoler, ionischer Flüssigtreibstoffe niedrigen Dampfdrucks und ein Verfahren zu deren Anzündung. Heißgaserzeuger auf Basis flüssiger Monergole werden seit den Anfängen der Raketentechnik eingesetzt, wo ihre typischerweise geringen Abgastemperaturen oder relative Einfachheit gegenüber diergolen Heißgaserzeugern von Vorteil sind. Eines der frühesten Anwendungsbeispiele findet sich im Betrieb von Turbopumpen für Raketentriebwerke, aber auch turbinengestützten elektrischen Generatoren (APUs) und Hydraulikaggregaten. Mittlerweile ist als Haupteinsatzgebiet die Satellitentechnik in den Vordergrund getreten, wo monergole Heißgaserzeuger das Arbeitsmedium für Satellitentriebwerke kleiner und mittlerer Leistungsklasse zur Verfügung stellen. Als Monergol wird hier fast ausschließlich das kanzerogene und gegenüber Verunreinigungen sehr empfindliche Hydrazin eingesetzt. Satellitentriebwerke besitzen als gaserzeugendes Element einen Festbettreaktor mit katalytisch aktivem, z.B. Iridium beschichteten Träger. Typischerweise leitet ein elektromagnetisch-aktuiertes Ventil die Schubphase des Triebwerks ein und flüssiges Hydrazin wird in den vorgeheizten Reaktor eingespritzt. Bei der Zersetzung des Hydrazins entstehen dann Temperaturen von bis zu 1300 K und neben Stickstoff und Wasserstoff auch Ammoniak. Nach ähnlichem Betriebsschema wurde in der Vergangenheit auch Wasserstoffperoxid genutzt, dessen Lagerbarkeit aber als noch schwieriger zu bewerten ist. Die hohen Temperaturen und Temperaturgradienten, sowie Nebenprodukte (Katalysatorgifte) limitieren nicht nur die Lebensdauer des Katalysators, sondern auch die Kaltstartfähigkeit. Bei derzeitigen Satellitentriebwerken wird eine Abnahme der katalytischen Umsatzrate und somit auch der Leistungsfähigkeit des Antriebs während der Einsatzdauer in Kauf genommen. Die Festbettreaktoren sind außerdem empfindlich gegenüber festen Ablagerungen, sodass leistungsfähigere, metallisierte oder rußbildende, sauerstoffunterbilanzierte und somit materialschonendere Treibstoffe nicht eingesetzt werden können.

Wie bereits in US 3,651,644 A erwähnt, wurden deshalb Alternativen zur katalytischen Zersetzung untersucht, welche eine thermische Zersetzung durch elektrolytische Aufheizung von Hydrazin im Spalt zweier fixer Elektroden zu erzielen versuchten. Die Funktionsfähigkeit des beschriebenen Apparates insbesondere unter Vakuumbedingungen ist fraglich, da Hydrazin unterhalb seines Dampfdrucks nur als Gasphase geringer elektrischer Leitfähigkeit vorliegt und auch im flüssigen Zustand nur in geringem Maße mobile Ionen bereitstellt. Auch bedingt der hohe Dampfdruck von Hydrazin und anderen gängigen Monergolen, dass die Zersetzungstemperatur durch Methoden, welche zwingend auf das Vorhandensein einer flüssigen Phase angewiesen sind, nicht erreicht werden kann. Dies gilt insbesondere für die elektrolytische-, ohmsche- oder radiative- (vgl. Laser-) Heizung und Anzündung.

Der fixe Elektrodenabstand und die permanente Öffnung des Injektors und elektrolytischen Reaktionsraumes in Richtung der Brennkammer birgt in US 3,651,644 A ein erhebliches Sicherheitsrisiko, da insbesondere bei Druckschwankungen im Betrieb oder nach dem Abschalten der Treibstoffzufuhr, ein Fortschreiten der Reaktion stromaufwärts des Injektors nicht verhindert werden kann. Die gleichen Probleme können in US 3,861,137 A identifiziert werden, wo ebenfalls die elektrolytische Zersetzung eines nicht genauer spezifizierten Monergols im fixen Spalt zweier Elektroden zur Anzündung genutzt wird. Im Gegensatz zu US 3,651,644 A sind sowohl Elektroden als auch der dazwischen befindliche Spalt aus porösem, mediendurchlässigem Material gefertigt. Die Porosität und erhöhte Oberfläche verspricht zwar eine schnellere Anzündung des Monergols und stabilere Verbrennung dank des erhöhten Wärmeübergangs, durch die Porosität werden aber auch einige Probleme katalytischer Festbettreaktoren übernommen. So ist das poröse Medium ohne thermische Isolation zur Brennkammer von den hohen Temperaturen des Abgases betroffen und durch die große Oberfläche besonders gefährdet von Sinterprozessen, oder der Verstopfung durch rußbildende Zersetzungsprozesse. Die feinporigen Elektroden verbieten weiterhin den Einsatz metallisierter Treibstoffe.

Eine neuere Erfindung beschreibt unter US 8,375,697 B2 einen elektrolytischen Zünder für Diergole Raketentriebwerke, wobei nur zur Zündung eine elektrisch leitfähige Lösung im notwendigerweise großen Spalt mindestens zweier Elektroden erhitzt wird, von denen sich mindestens eine stromabwärts des Injektors in der Brennkammer befindet. Die verwendeten Elektrolyten sind dabei entweder nicht energetische, ionische Flüssigkeiten und Reinstoffe im chemischen Sinne, oder wässrige Monergole. Im ersten Fall ist durch den geringen Dampfdruck eine Aufheizung des Elektrolyten bis zu dessen Zersetzungstemperatur möglich, welche jedoch üblicherweise unterhalb 500 °C liegt. Da darüber hinaus keine weitere Aufheizung der Zersetzungsprodukte durch eine exotherme Reaktion erfolgen kann, wird die Anzündung der zugeführten Diergole deutlich erschwert. Die Anzündung mittels eines wässrigen Monergols mit nicht vernachlässigbarem Dampfdruck ist aus den oben genannten Gründen nicht einsetzbar. Auch in US 8,375,697 B2 werden außerdem keine Maßnahmen zur Verhinderung eines Rückschlags der Flammenfront stromaufwärts des Elektrolyt-Injektors aufgezeigt. Da der Elektrolytstrahl die Injektionszonen von Oxidator und Treibstoff überbrücken muss, wären Elektrodenabstände im Bereich einiger Millimeter notwendig. Unter diesen Bedingungen wird nicht nur der ununterbrochene Aufbau einer leitfähigen Heizstrecke durch die schneidenden Strahlen des Diergols erschwert, sondern auch die Applikation hoher Spannungen erforderlich.

Aus der US 2010/005779 A1 ist eine an einem stromauf gelegenen Ende einer Wand einer Brennkammer eines Raketentriebwerks angeordnete Vorrichtung zum Einspritzen eines flüssigen Monergols bekannt, dessen Durchflussrate stark moduliert ist, die einen Zuführkanal zum Zuführen eines Monergols aus einem Tank aufweist. Die Vorrichtung umfasst einen einzelnen ringförmigen Beschleunigungskanal, der mit dem Zufuhrkanal verbunden ist und dessen Auslass sich über einen ringförmigen Einspritzabschnitt öffnet, wobei der Beschleunigungskanal und der ringförmige Einspritzabschnitt einerseits durch eine erste Wand definiert werden, die eine stationäre Rotationsfläche bildet, die auf gleicher Höhe mit dem stromauf gelegenen Ende angeordnet ist, und andererseits durch eine zweite Wand, die eine Rotationsfläche bildet, die sich auf einem Teil befindet, das relativ zur ersten Wand verschiebbar ist und eine stationäre Rotationsfläche bildet.

Aus der US 2015/059314 A1 ist eine Vorrichtung und ein Verfahren zum elektrischen Zünden und Drosseln von pyroelektrischem Treibstoff bekannt, z. B. in einem Raketentriebwerk. Die Vorrichtung umfasst einen Injektorkörper zum Zuführen eines elektrisch zündbaren Treibstoffes zu einer Brennkammer und gegenüberliegende Elektroden. Eine erste Elektrode ist im Injektorkörper enthalten und eine zweite Elektrode ist relativ zur ersten Elektrode derart positioniert, dass eine Zündung des elektrisch zündbaren Treibstoffes bewirkt wird, wenn der elektrisch zündbare Treibstoff dadurch hindurchströmt.

Die US 2013/305685 A1 befasst sich mit N₂O basierten Monergolen für Raumfahrtantriebe.

Aus der US 2015/299063 A1 sind Flüssigtreibstoffe bekannt, die eine geringe Toxizität aufweisen, die einfach zu handhaben sind und die einen hervorragenden spezifischen Impuls haben. Die beschriebenen Flüssigtreibstoffe weisen zumindest ein Dinitramidderivat und ein Aminnitrat auf

Aus der US 2010/107601 A1 ist ein elektrolytischer Zünder bekannt, der einen Injektor, der eine erste Elektrode darstellt, eine zweite Elektrode, die von dem Injektor durch einen Isolator elektrisch isoliert ist und sich stromabwärts über den Injektor hinaus erstreckt, einen Tank für ein erstes Monergol, ein Magnetventil, das zwischen dem Tank und einem Verteilerkanal angeordnet ist und dazu dient, das erste Monergol an die erste Monergol-Injektorvorrichtung zu liefern, die aus mindestens einem Einspritzloch besteht, das in der Nähe der zweiten Elektrode mündet, und eine elektrische Stromversorgungsschaltung aufweist, die geeignet ist, die zweite Elektrode auf ein Potential anzuheben, das im Bereich von 50 V bis 1000 V relativ zum Potential der ersten Elektrode liegt. Die durch lonenleitung im Freistrahl des ersten Monergols dissipierte elektrische Leistung ist geeignet, eine spontane Zersetzung des ersten Monergols herbeizuführen und ein Verbrennungsgas zu erzeugen, das für die Zündung von Strahlen eines zweiten Monergols sorgt, das von einem Hauptinjektor stammt, der sich in der Nähe der zweiten Elektrode befindet.

In den letzten Jahren sind neben den beiden eingangs erwähnten klassischen Monergolen Hydrazin und Wasserstoffperoxid auch 2 "grüne" Alternativen in den Fokus der Forschung gerückt. Einerseits die Hydroxylammoniumnitrat- (HAN-) und andererseits die Ammoniumdinitramid- (ADN-) basierten Flüssigtreibstoffe, welche neben den erstgenannten Oxidatoren einen organischen Brennstoff (z.B. Methanol) in wässirger Lösung enthalten. So wird beispielsweise in WO 2012/166046 A2 ein ADN basierter Flüssigtreibstoff beschrieben, welcher jedoch auf Grund seines hohen Dampfdrucks nicht für eine Lagerung unter Vakuumbedingungen oder eine elektrische Anzündung geeignet ist. Letzteres zeigen z.B. die Ergebnisse aus dem RHEFORM Projekt (Negri et al., "New technologies for ammonium dinitramide based monopropellant thrusters - The project RHEFORM", Acta Astronautica, 2018, vol. 143, 105-117) in denen wässrige ADN Treibstoffe wie z.B. LMP-103S oder FLP-106 elektrischen Pulsen bis etwa 350 Volt Gleichspannung ausgesetzt wurden.

Um die genannten Nachteile bisheriger Konzepte zur elektrolytischen Zündung auszuräumen, ist die Einführung eines neuen Monergols sehr niedrigen Dampfdrucks ebenso nötig, wie eine Umstrukturierung der Elektroden und die Implementierung einer brennkammernahen Rückschlagventilfunktion.

### Beschreibung der Erfindung

Die vorliegende Erfindung führt als Monergole sehr niedrigen Dampfdrucks weitgehend wasserfreie ionische Lösungen ein. Als Basis dieser Lösungen können beispielsweise die auch bei Raumtemperatur flüssig vorliegenden Nitrate des Ethylamins und n-Propylamins dienen, in welchen zur Erhöhung der Sauerstoffbilanz und Absenkung des Gefrierpunkts weitere nicht zwingend bei unter 20 °C schmelzende Salze gelöst werden. Bevorzugte Salze zur Erhöhung der Sauerstoffbilanz und Gefrierpunktserniedrigung umfassen Ammoniumnitrat (AN), Methylammoniumnitrat (MAN), Ethylendiammoniumnitrat (EDAN), Hydraziniumnitrat (HN), Guanidiniumnitrat (GN), Aminoguanidiniumnitrat (AGN) und Ammoniumdinitramid (ADN). Da für Anwendungen im Pulsbetrieb (z.B. Lageregelung) sehr kurze Ansprechzeiten der Heißgaserzeugungsvorrichtung nötig sein können, ist es möglich die niederenergetischen Treibstoffkombinationen zur Verkürzung der Zündtransiente mit löslichen Katalysatoren anzupassen. Als lösliche Katalysatoren sind Salze und Komplexe der Übergangsmetalle geeignet, insbesondere Eisen, Cobalt, Kupfer und Silberverbindungen. Zusätzlich können die Elektrodenoberflächen als heterogene Katalysatoren die Anzündung und Zersetzung im Elektrodenspalt unterstützen. Hierfür eignen sich z.B. oberflächliche Beschichtungen mit Kupfer, Silber, Platin, Palladium, Iridium, Rhodium, Osmium, Ruthenium und Rhenium, da Edelmetalle in geringerem Maße der Korrosion durch anodische Oxidation bzw. kathodische Wasserstoffversprödung ausgesetzt sind und durch Bindung und Bildung reaktiver Spezies zur Beschleunigung der Zersetzung beitragen können. Leitfähigkeit und Schmelzpunkt der Monergole können durch einen nicht flüchtigen (Siedepunkt: > 150 °C bei 1 bar), nicht ionischen Zusatz in Konzentrationen bis maximal 15 Massenprozent angepasst werden. Der geringe Dampfdruck des nicht ionischen Zusatzstoffs ist notwendig, um transpirative Wärmeverluste während der Anzündung zu vermeiden. Zur Erniedrigung des Schmelzpunktes eignen sich insbesondere Verbindungen aus der Gruppe der Harnstoffe, Guanidine, Formamide, Imidazole, Triazole und Tetrazole. Zur Erhöhung der Verbrennungseffizienz, des spezifischen Impulses und der Abbrandtemperatur kann das Monergol mit suspendierten Brennstoffen versetzt werden. Als Brennstoffe eignen sich feine Metallpulver mit vergleichsweise niedrigem Siedepunkt und hohem Brennwert, wie z.B. Pulver von Aluminium, Zink, Bor, Magnesium und Legierungen dieser Metalle, aber auch kohlenstoffhaltige Brennstoffe, wie z.B. Urotropin. Um die Injektoren nicht zu verstopfen und eine vollständige Verbrennung zu erreichen, sollten suspendierte Brennstoffe Partikelgrößen kleiner als 100 µm aufweisen.

Genannte ionische Treibstoffe sind in den meisten Fällen von vernachlässigbarer Giftigkeit und erzeugen selbst bei potentiell toxischen Zusätzen (z.B. Hydrazinnitrat) keinerlei Gasphase. Das Fehlen giftiger Dämpfe erleichtert das Handling, da im Gegensatz zu bisher verbreiteten lagerfähigen Treibstoffen wie Hydrazin, Methylhydrazinen (MMH, UDMH), Stickstofftetroxid, Salpetersäure, Wasserstoffperoxid und sogar den als "grün" betrachteten ADN-Treibstoffen (LMP-103S) keine Ganzkörperschutzausrüstungen, speziellen Belüftungssysteme oder Atemschutzfilter nötig sind. Ferner können die Eigenschaften des Treibstoffs auf die Erfordernisse der jeweiligen Mission angepasst werden, da die bei Raumtemperatur flüssigen, ionischen Flüssigkeiten, Katalysatoren und sauerstoffreiche Salze in weiten Grenzen zu lösen vermögen.

Der ionische Charakter der beschriebenen Treibstoffe erhöht außerdem die Dichte und minimiert die Sensitivität gegenüber mechanischen und thermischen Stimuli, da negativ geladene Oxidatoren (z.B. Nitrat, Dinitramid, Perchlorat) und positiv geladene Reduktionsmittel (z.B. Hydrazinium) meist stabiler als entsprechende neutrale Analoga sind. So besitzen die Treibstoffe eine Dichte zwischen etwa 1.2 g/ml und 1.6 g/ml, sowie eine Schlagempfindlichkeit nach dem BAM-Fallhammertest von min. 30 Nm in den meisten Fällen sogar größer als 50 Nm. Die minimale Zersetzungstemperatur kann Werte bis zu 300 °C erreichen, was den Einsatz in einer regenerativen Kühlung ermöglicht.

Die ionischen Lösungen erreichen als niederenergetische Monergole einen spezifischen Impuls auf dem Niveau heutiger Hydrazinaggregate, jedoch ohne die Nachteile der Leistungsdegradation durch Alterung des Katalysators in Kauf nehmen zu müssen, da der Katalysator falls benötigt in gleichbleibender Konzentration aus dem Treibstoff zugeführt wird. Höherenergetische Varianten mit Dinitramid-, Nitroformat- oder Perchlorat-Anteil übertreffen den spezifischen Impuls des Hydrazins und können die Leistungsfähigkeit lagerfähiger Diergole erreichen. In jedem Fall ist als Folge der hohen Dichte eine deutliche Zunahme des volumenspezifischen Impulses gegenüber derzeit eingesetzten Systemen gegeben.

Die gegenständlichen ionischen Monergole enthalten genügend Sauerstoff um auch ohne externen Katalysator eine intermolekulare Verbrennungsreaktion (im Gegensatz zur eher intramolekularen Zersetzungsreaktion von Hydrazin oder Wasserstoffperoxid) aufrechtzuerhalten. Da eine Verbrennung im Gegensatz zur katalytischen Zersetzung nicht auf metastabile chemische Bindungen angewiesen ist, kann mit den vorgeschlagenen ionischen Komponenten ein Treibstoff mit ausgezeichneter chemischer Stabilität eingesetzt werden. Andererseits bedingt die relative Inertheit der vorgeschlagenen Monergole auch den Verzicht auf eine katalytische Anzündung und erfordert die Einführung einer neuen Anzündmethode.

Die erfindungsgemäße Anzündmethode nutzt die gute elektrische Leitfähigkeit der ionischen Monergole um bei geringen elektrischen Spannungen und kurzzeitig hohen Strömen eine elektrolytische Zersetzung des Treibstoffs einzuleiten. Ausschlaggebend ist dabei nach bisherigem Kenntnisstand vor allem die Bildung reaktiver, oxidierender Spezies an der Anode nach Überschreiten der anionenspezifischen Zersetzungsspannung (je nach Zusammensetzung etwa 5 Volt). Für die meisten Anwendungen der Heißgaserzeugungsvorrichtung ist die Speisung mit Kleinspannung von typischerweise 10 bis etwa 120 Volt ausreichend, wie sie z.B. aus dem Bordnetz eines Flugzeugs, einer Rakete, eines Satelliten oder durch mitgeführte elektrochemische Zellen bereitgestellt werden kann. Die geringe Spannung minimiert nicht nur den Aufwand für die elektrische Qualifizierung, sondern auch das Risiko elektrischer Überschläge im partiellen Vakuum. Die Erfindung ist in diesem Punkt Systemen mit Funkenzündung wie dem sog. (*Augmented) Spark Igniter* wie er in Wasserstoffraketentriebwerken, Gasturbinen oder Strahltriebwerken häufig verwendet wird, überlegen. Die Bauform mit während des Betriebs vom Treibstoff umspülten Elektroden verhindert weiterhin die Ablagerung von Verbrennungsrückständen, welche häufig problematisch in der Handhabung von Zündfunkenanlagen sind.

Für besonders kurzen Pulsbetrieb können Potentiale bis in den oberen Bereich der Niederspannung also bis etwa 1000 Volt, zur Verkürzung der Zündtransiente eingesetzt werden. Eine Anzündung ist sowohl mit Gleich- als auch mit niederfrequentem Wechselstrom möglich.

Die Anzündung wird zweckmäßig bei niedrigen Massenströmen des beschriebenen ionischen Monergols begonnen, da so die erforderliche elektrische Zündleistung begrenzt werden kann. Je nach Anwendung ist eine temporäre Drosselung des Massenstroms auf weit unter 50 % des Nominalmassenstroms möglich, wobei die niedrigsten relativen Massenströme bei Hochdruck-Heißgaserzeugungsvorrichtungen erreicht werden. Grund hierfür ist die Druckabhängigkeit der Abbrandrate entstehender Tröpfchen des Monergols. Die Reaktionszone wird mit steigendem Brennkammerdruck kontrahiert und der thermische Eintrag in die Zerstäubungszone verbessert. Soll eine Anzündung unter Vakuumbedingungen erreicht werden, muss deshalb zunächst mit dem im Elektrodenspalt zersetzten Monergol ein Brennkammerdruck oberhalb des sog. *Pressure Deflagration Limits (PDL)* erreicht werden. Typischerweise ist eine stabile, selbsterhaltende Verbrennung ohne weitere Zufuhr elektrischer Energie ab etwa 1 - 5 bar Kammerdruck möglich. Mit dem Erreichen des kritischen Kammerdrucks kann der Stromkreis der elektrischen Anzündung unterbrochen und in den Nominalbetrieb übergegangen werden. Der Brennkammerdruck kann bereits während der elektrischen Anzündung graduell durch eine Zunahme des Massenstromes erhöht werden.

Abhängig von der Viskosität und der Zersetzungstemperatur des Treibstoffes, kann dessen Erwärmung vor der Einspritzung die Zerstäubung durch den Injektor und die Anzündung verbessern. Für niederviskose Treibstoffe mit geringer thermischer Stabilität ist eine Vorwärmung auf 20 - 40 °C in der Regel ausreichend. Bei Treibstoffen hoher Viskosität und Zersetzungstemperatur kann eine Vorwärmung auf 100 - 200 °C zur Verkürzung der Zündtransiente beitragen.

Durch die Kopplung der Heißgaserzeugungsvorrichtung mit einer elektrischen Pumpeneinheit kann auf eine aktive Regelung durch Ventile verzichtet werden, was gegenüber verfügbaren Systemen zur Gewichtsreduktion genutzt werden kann. Die Pumpe kann beispielsweise als Zahnradpumpe ausgeführt werden, was eine präzise und zügige Einstellung der Massenströme erlaubt. Das in der Erfindung vorgestellte ionische Monergol ist für die Pumpenförderung besonders geeignet, da es im Gegensatz zu bisherigen Monergolen mit allen herkömmlichen Dichtungswerkstoffen kompatibel ist und dank des niedrigen Dampfdrucks nicht zur Kavitation neigt. Die mäßige Viskosität in Kombination mit der hohen Wärmekapazität und thermischen Beständigkeit eröffnet weiterhin die Möglichkeit das ionische Monergol auch als Kühl- und Schmiermittel für das Pumpenaggregat zu verwenden. Insbesondere bei Heißgaserzeugungsvorrichtungen hoher Leistung kann die Pumpe auch über die Welle einer Gasturbine angetrieben werden, welche ebenfalls den beschriebenen ionischen Treibstoff geringen Dampfdrucks nutzt.

Für einen sicheren Betrieb der Heißgaserzeugungsvorrichtung wird in der vorliegenden Erfindung ein brennkammerseitig verschließbarer Injektor vorgeschlagen. Im Prinzip handelt es sich dabei um ein im Injektorkopf integriertes, federbelastetes, und/oder extern-aktuiertes Rückschlagventil. Insbesondere umfasst die Erfindung eine Bauart, bei der die Rückschlagventilfunktion im Bereich des höchsten Druckverlustes des Injektors und abschließend mit der brennkammerseitigen Austrittsöffnung des Injektors integriert wird. Der selbsttätige Verschluss garantiert eine Treibstoffzufuhr in Richtung der Brennkammer, sofern der Eingangsdruck des Injektors um einen gewissen Betrag höher als der Brennkammerdruck ist. Der als Öffnungsdruck (engl. *crack pressure*) bezeichnete Betrag muss auf die Anwendung abgestimmt werden und liegt typischerweise zwischen etwa 1 - 10 bar. Übersteigt der Brennkammerdruck den Eingangsdruck des Injektors abzüglich des Öffnungsdrucks, sperrt der selbsttätige Verschluss die Treibstoffzufuhr in die Brennkammer und unterbricht die Verbindung zwischen Heißgas und nicht reagiertem Monergol. Mit dem Unterbinden der Treibstoffzufuhr sinkt der Brennkammerdruck und eine Entzündung des Monergols im Injektor, den Zuleitungen und dem Tank wird physikalisch verhindert. Besonders wichtig ist diese physikalische Trennung während transienter Betriebsphasen wie dem Abschalten der Heißgaserzeugungsvorrichtung, da hier der Injektorvordruck unter den nominellen Brennkammerdruck sinkt. Mit dem Erreichen einer Strömungsgeschwindigkeit des Monergols die bei den jeweiligen Temperaturen und Drücken der linearen Abbrandgeschwindigkeit des Treibstoffs entspricht, würde ohne physikalische Trennung ein Übergang der Reaktionszone in den Injektor stattfinden.

Bei längerem Betrieb der Heißgaserzeugungsvorrichtung droht ohne externe Kühlung eine Überhitzung des Injektorkopfes nach Betriebsschluss, da die Elektroden nun nicht mehr durch einströmenden Treibstoff gekühlt werden können, die heiße Brennkammer durch Wärmeleitung aber weiterhin einen positiven Wärmestrom einbringt. Dieses Problem umgeht die vorliegende Erfindung durch 2 regenerative Ansätze. Zum einen können die brennkammerseitigen Bauteile des Injektors durch Wärmerohre mit einer Wärmesenke verbunden werden. Andererseits kann auch der ionische Treibstoff nach Abschalten der Heißgaserzeugungsvorrichtung in einem Sekundärkreislauf mit Wärmesenke zirkuliert werden. Als Wärmesenke kommen bei bodengestützten Anwendungen Kühlwasserkreisläufe und Wärmeleiter hoher Wärmekapazität in Frage. Für Anwendungen der Luftfahrt kann Umgebungs- oder Zapfluft zur Kühlung genutzt werden. Außerhalb der Atmosphäre können Radiatoren die Wärme großflächig abstrahlen oder Treibstofftanks als kapazitive Speicher dienen.

Durch den niedrigen Dampfdruck der ionischen Monergole ist eine Lagerung in sehr leichten, flexiblen Tanks möglich. Aufgrund der guten Materialverträglichkeit des ionischen Treibstoffs können hierfür bereits entwickelte, wasserdichte Textilien, wie z.B. Dyneema-PET-Compounds verwendet werden. Die Lagerung kann selbst unter Vakuumbedingungen weitgehend drucklos erfolgen, was drastische Gewichtseinsparungen auf Strukturebene gestattet.

### Ausführungsbeispiele der Erfindung

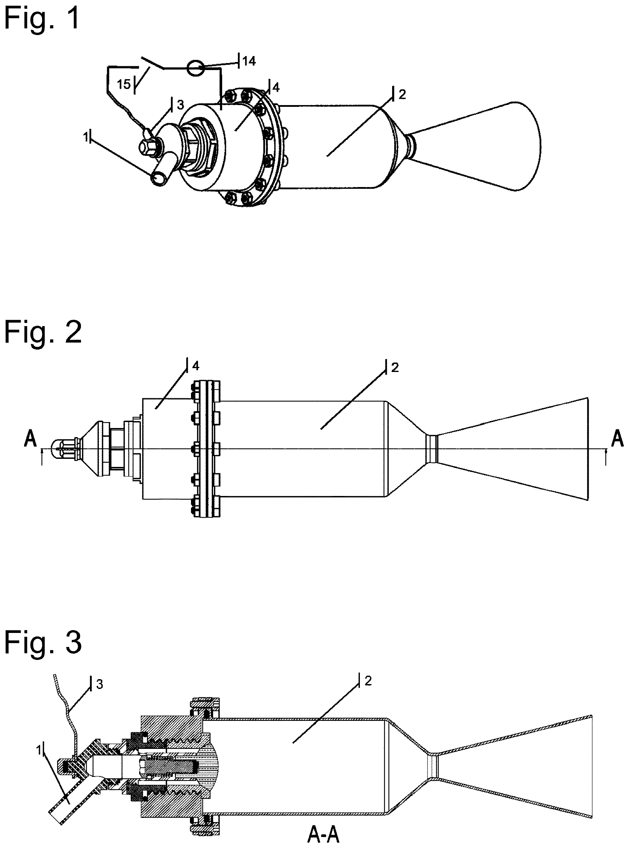

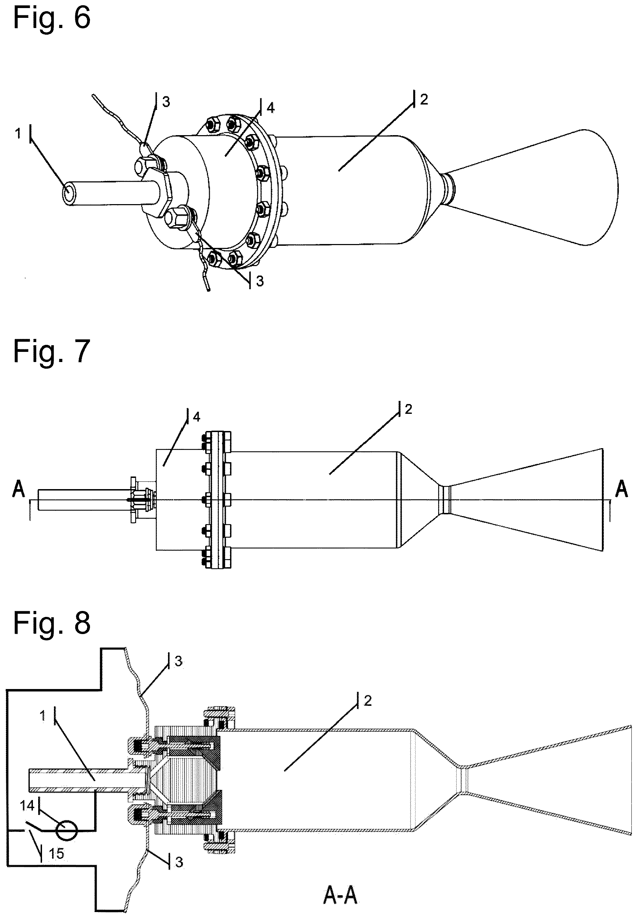

Nachfolgend finden sich zwei mögliche Ausführungsbeispiele der erfindungsgemäßen Heißgaserzeugungsvorrichtung, wobei ausdrücklich auch andere Ausführungen gemäß den angeführten Ansprüchen realisiert werden können. Die erste Ausführung basiert auf einem einzelnen konischen Injektor und ist in den Fig. 1 - 5 dargestellt. Die zweite Ausführung kombiniert zwei gegenüberliegende Injektoren polygonaler Geometrie und ist in den Fig. 6 - 9 dargestellt. Hierbei zeigen:
Fig. 1: eine perspektivische Ansicht der Heißgaserzeugungsvorrichtung mit Einzelinjektor und Expansionsdüse sowie eine schematische Darstellung der Stromversorgung.
Fig. 2: eine Draufsicht der Heißgaserzeugungsvorrichtung mit Einzelinjektor und Expansionsdüse sowie die Verdeutlichung der Ebene A-A der Schnittzeichnung.
Fig. 3: eine Schnittzeichnung gem. Ebene A-A aus Fig. 2.
Fig. 4: eine Detailansicht der Injektoreinheit aus der Schnittzeichnung gem. Fig. 3 mit geschlossenem Injektor.
Fig. 5: eine Detailansicht der Injektoreinheit aus der Schnittzeichnung gem. Fig. 3 mit geöffnetem Injektor, wobei die Pfeile die Durchflussrichtung des Treibstoffs angeben.
Fig. 6: eine perspektivische Ansicht der Heißgaserzeugungsvorrichtung mit Dublett-Injektor und Expansionsdüse.
Fig. 7: eine Draufsicht der Heißgaserzeugungsvorrichtung mit Dublett-Injektor und Expansionsdüse sowie die Verdeutlichung der Ebene A-A der Schnittzeichnung.
Fig. 8: eine Schnittzeichnung gem. Ebene A-A aus Fig. 7 und eine schematische Darstellung der Stromversorgung.
Fig. 9: eine Detailansicht der Injektoreinheit aus der Schnittzeichnung gem. Fig. 8 mit je einem geschlossenen und einem geöffneten Injektor. Die wechselseitige Öffnung dient hier nur der Verbildlichung möglicher Injektorzustände und beschreibt keinen realen Betriebszustand. Die Pfeile deuten die Durchflussrichtung des Treibstoffs im geöffneten Injektor an.

In beiden Ausführungen der Erfindung wird ein weitgehend wasserfreies, ionisches Monergol axial durch eine zentrale Treibstoffzuleitung 1 bereitgestellt. Die Treibstoffzuleitung 1 steht mit dem Injektorgehäuse 4 in Verbindung, von welchem aus beschriebenes Monergol in die Brennkammer 2 eingespritzt wird. Injektorgehäuse 4 und Brennkammer 2 sind in den Ausführungsbeispielen durch einen Flansch verbunden, der eine temperaturbeständige Brennkammerdichtung 11 z.B. aus Lamellengraphit aufnimmt. Die Brennkammer 2 kann bei geringer Last aus einer Nickelbasislegierung gefertigt werden. Bei höherer Last empfiehlt sich die Verwendung keramischer Verbundwerkstoffe, ablativer Materialien wie kohlenstofffaserverstärktem Phenolharz oder Edelmetalllegierungen, wie z.B. Ir-Re. Die bei der Verbrennung entstehenden Gase verlassen die Brennkammer 2 in beiden Ausführungsbeispielen mit Überschallgeschwindigkeit durch eine Lavaldüse. Der resultierende Schub kann zur Beschleunigung von Luft- und Raumfahrzeugen dienen. Abgesehen von der Nutzung zur Schuberzeugung, können die Verbrennungsgase auch ohne die Notwendigkeit einer Lavaldüse zum Antrieb von Turbo- und Kolbenmaschinen oder zur Anzündung genutzt werden.

Die Heißgaserzeugungsvorrichtung der Fig. 1 kann also als Heißgasquelle eines Rückstoßantriebs, als Anzünder eines Rückstoßantriebs, einer Turbo- oder Kolbenmaschine oder zur Bereitstellung des Arbeitsgases einer Turbine oder einer Kolbenmaschine eingesetzt werden.

Brennkammer 2 und Injektorgehäuse 4 sind in beiden Ausführungen leitend verbunden und stehen mit einem Pol einer Spannungsquelle 14 in Kontakt. Der gegensätzliche Pol ist über den elektrischen Kontakt 3, die Injektorbuchse 12 (hier nur in Ausführung mit Einzelinjektor) und die Injektorschraube 9 elektrisch leitend mit der Injektorelektrode 5 verbunden. Als Spannungsquelle 14 können Gleichstromerzeuger, wie z.B. Akkumulatoren, Brennstoffzellen und Photovoltaikanlagen verwendet werden. Ebenfalls möglich ist die Einspeisung einer Wechselspannung z.B. mittels Dreh- oder Lineargenerator. Die Spannungsquelle kann durch einen elektrischen Schalter 15 von den Elektroden getrennt werden.

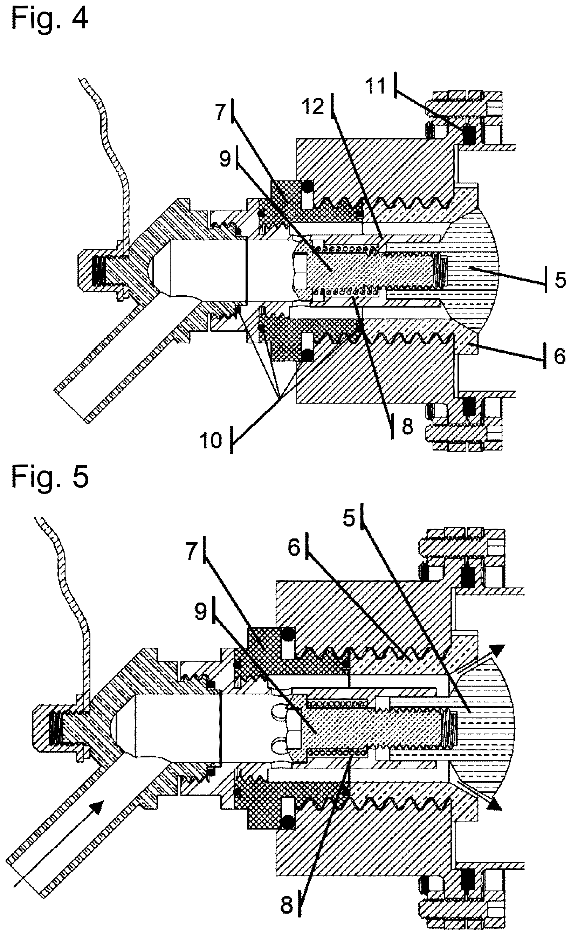

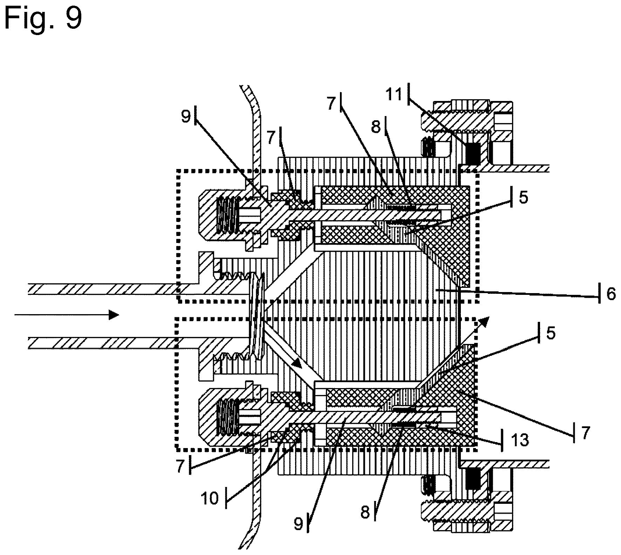

Die Injektorelektroden 5 stehen im geschlossenen Zustand dichtend mit der entsprechenden Gegenelektrode 6 in Kontakt und verhindern so die Rückströmung von Heißgas aus der Brennkammer 2 stromaufwärts in Richtung der Treibstoffzuführung 1. Im geöffneten Zustand (Fig. 5 u. Fig. 9) bilden die Gegenelektroden 6 und Injektorelektroden 5 über den treibstoffführenden Elektrodenspalt eine elektrochemische Zelle. Unter Stromzufuhr kann der Treibstoff im Elektrodenspalt erhitzt und entzündet werden. Injektorelektroden 5 und Gegenelektroden 6 können einen Elektrodenspalt mit ringförmigem (vgl. Fig. 1 - 5), rechteckigem (vgl. Fig. 6 - 9) oder polygonalem Querschnitt ausbilden. Neben Einzel- (in Fig. 1 - 5 sog. Pintleähnlicher Injektor bzw. Zapfeneinspritzdüse) und Dublett-Injektoren (in Fig. 6 - 9 sog.

Sheet Impingement) können auch andere Arten von Prallinjektoren oder eine Vielzahl von Injektorelementen in einer Brennkammer 2 kombiniert werden. Die Wahl des Werkstoffs für Injektorelektrode 5 und Gegenelektrode 6 richtet sich nach dem verwendeten Monergol und kann ein Edelmetall, wie z.B. Kupfer, Silber, Platin, Palladium, Iridium, Rhodium, Osmium, Ruthenium und Rhenium als Vollmaterial oder Beschichtung nutzen, um die Korrosionsbeständigkeit und katalytische Aktivität gegenüber dem Treibstoff zu verbessern.

Im geöffneten Zustand sind die Injektorelektroden 5 stromaufwärts des Elektrodenspalts durch Isolatoren 7 elektrisch vom Injektorgehäuse 4 separiert. Die Isolatoren 7 können aus einem elektrisch nicht leitfähigen Werkstoff moderater Temperaturbeständigkeit gefertigt werden, also z.B. Hochleistungspolymeren aus der Gruppe der perfluorierten Kohlenwasserstoffe (PTFE, PCTFE), Polyamidimide (PAI), oder Polyaryletherketone (PEEK). Polymere Werkstoffe können faserverstärkt sein. Ebenfalls denkbar ist der Einsatz von Isolatoren 7 mit erhöhter Temperaturbeständigkeit und thermischer Leitfähigkeit, die aus keramischen Materialien oder polymerbeschichteten metallischen Werkstoffen gefertigt werden können. Verminderte thermische Anforderungen an die Isolatoren sind nur durch die Kühlung des Injektorgehäuses 4 möglich. Das Injektorgehäuse 4 kann für Anwendungen geringer Last und kurzer Dauer als kapazitiver Kühlkörper aus Werkstoffen hoher thermischer Leitfähigkeit, wie z.B. Kupfer, Silber, oder Aluminium gefertigt werden, wie dies in den hier gezeigten Ausführungen dargestellt ist. Bei hoher Last können zusätzlich Wärmerohre mit radialem Verlauf in das Injektorgehäuse 4 integriert werden. Ausgehend vom Injektorgehäuse 4 kann der Wärmestrom entweder an die umgebende Luft, einen Kühlmittelkreislauf oder radiativ an die Umgebung abgegeben werden. Der Kühlmittelkreislauf kann dank der guten thermischen Beständigkeit des Treibstoffs auch kapazitativ an das Treibstoffreservoir gekoppelt werden.

Der Verschluss von Injektorelektrode 5 und Gegenelektrode 6 bei zu geringem Treibstoffüberdruck gegenüber der Brennkammer 2 wird in den Ausführungsbeispielen durch Druckfedern 8 unterstütz. Der Hub der Druckfedern 8 wird über die Injektorschraube 9 und die Injektorbuchse 12 oder direkt durch die Injektorelektrode 5 und eine gegen Rotation gesicherte Injektormutter 13 begrenzt. Alternativ oder ergänzend zu den Druckfedern 8 können Aktuatoren verbaut werden, welche eine gesteuerte Öffnung bzw. Schließung der Injektoren erlauben. Der selbsttätige Verschluss bei zu geringem Treibstoffüberdruck kann in diesem Fall auch durch einen schnellen Regelkreis mit Sensoren in der Treibstoffversorgung und Brennkammer gewährleistet werden.

Das Injektorgehäuse 4 und alle treibstoffführenden Teile werden durch Injektordichtungen 10 gegenüber der Umgebung gedichtet. Die Injektordichtungen 10 können bei geringer Last aus einem thermisch beständigen Elastomer (z.B. FKM, FFKM) als O-Ringe, oder bei hoher Last als metallische C-Ringe ausgeführt werden.

Mögliche Ausführungen des Treibstoffs umfassen beispielsweise ionische Monergole folgender Zusammensetzungen:
Formulierung 1:

| | |
|---|---|
| 80 % | n-Propylammoniumnitrat |
| 18 % | Propargylammoniumnitrat |
| 1 % | anhydr. Kupfer(II)-chlorid |
| 1 % | Graphitpulver (< 5 µm) |

Formulierung 2:

| | |
|---|---|
| 65 % | Ethylammoniumnitrat |
| 24 % | Lithiumperchlorat |
| 6 % | Imidazol |
| 3 % | Zinkpulver (< 10 µm) |
| 2 % | Kupfer(II)-perchlorat |

### Bezugszeichenliste

- 1: Treibstoffzuleitung
- 2: Brennkammer
- 3: elektrischer Kontakt
- 4: Injektorgehäuse
- 5: Injektorelektrode
- 6: Gegenelektrode
- 7: Isolator
- 8: Druckfeder
- 9: Injektorschraube
- 10: Injektordichtung
- 11: Brennkammerdichtung
- 12: Injektorbuchse
- 13: Injektormutter (Anschlag für Druckfeder)
- 14: Spannungsquelle
- 15: elektrischer Schalter

## Patentansprüche

1. Heißgaserzeugungsvorrichtung zur Umsetzung eines Treibstoffs mit
einer Brennkammer (2);
mindestens einem vor der Brennkammer (2) angeordneten und brennkammerseitig für den Treibstoff verschließbaren Injektor, in den Elektroden (5, 6) integriert sind; und
mindestens einer Zuleitung (1) für den Treibstoff; wobei
der Treibstoff ein monergoler Treibstoff und eine weitgehend wasserfreie ionische Lösung sehr niedrigen Dampfdrucks ist, mit einem Restwassergehalt kleiner als fünf Massenprozent, welche zu einer selbsterhaltenden Verbrennung bei gegebenem Brennkammerdruck fähig ist;
die Elektroden (5, 6) mindestens zwei Elektroden gegensätzlicher Polarität aufweisen, die geeignet sind, den Treibstoff durch einen Stromfluss durch den Treibstoff elektrisch anzuzünden, wenn dieser zwischen den Elektroden gegensätzlicher Polarität hindurchströmt; und
für den brennkammerseitigen Verschluss des Injektors ein selbsttätig dichtender Injektorkopf (5) zwischen der Brennkammer (2) und dem Injektor angeordnet ist, der nur oberhalb eines injektorseitigen Öffnungsdrucks, der einen Überdruck relativ zum Brennkammerdruck darstellt, für den Treibstoff passierbar ist und damit eine Dichtwirkung unterhalb des injektorseitigen Öffnungsdrucks erreicht wird.

2. Heißgaserzeugungsvorrichtung nach Anspruch 1, wobei
mindestens ein Injektorkopf (5) mindestens eine Elektrode aufnimmt; und
bei geschlossenem Injektor die Elektroden (5, 6) gegensätzlicher Polarität in elektrischem Kontakt und in dichtendem Kontakt stehen.

3. Heißgaserzeugungsvorrichtung nach einem der vorherigen Ansprüche , wobei
der Treibstoff als ionische Lösung vorliegt, während er zwischen den Elektroden unterschiedlicher Polarität hindurchströmt;
die elektrische Anzündung dieser strömenden ionischen Lösung im Bereich einer Austrittsöffnung des Injektors stattfindet; und
eine Zersetzungstemperatur des Treibstoffs lokal überschritten wird.

4. Heißgaserzeugungsvorrichtung nach einem der vorherigen Ansprüche, des Weiteren mit
einem Aktuator zum Öffnen und Schließen des brennkammerseitig für den Treibstoff verschließbaren Injektors.

5. Heißgaserzeugungsvorrichtung nach einem der vorherigen Ansprüche, des Weiteren mit
Wärmerohren zur passiven Kühlung des Treibstoffs, die stromaufwärts der Brennkammer (2) angeordnet sind.

6. Heißgaserzeugungsvorrichtung nach einem der vorherigen Ansprüche, wobei
die Elektroden (5, 6) eine katalytisch aktive Oberfläche aufweisen, welche vorzugsweise durch Beschichtung mit Edelmetallen, weiter vorzugsweise durch Beschichtung mit Kupfer, Silber, Platin, Palladium, Iridium, Rhodium, Osmium, Ruthenium und Rhenium bereitgestellt wird.

7. Heißgaserzeugungsvorrichtung nach einem der vorherigen Ansprüche, wobei
zum Anzünden des Treibstoffs ein Potenzialunterschied von 3 bis 1000 Volt, vorzugsweise zwischen 10 und 120 Volt, zwischen den Elektroden anliegt.

8. Heißgaserzeugungsvorrichtung nach einem der vorherigen Ansprüche, des Weiteren mit
einer elektrisch betriebenen Pumpe zum Fördern des Treibstoffs aus einem Treibstofftank in den Injektor; und/oder
einem oder mehreren textilen Tanks zum Entnehmen des Treibstoffs.

9. Monergoler Treibstoff mit mindestens einem löslichen Katalysator und sehr niedrigem Dampfdruck, bestehend aus einer weitgehend wasserfreien ionischen Lösung, mit einem Restwassergehalt kleiner als fünf Massenprozent, welcher bei gegebenem Druck zu einer selbsterhaltenden Verbrennung fähig ist,
**dadurch gekennzeichnet, dass**
die löslichen Katalysatoren Salze und/oder Komplexe der Übergangsmetalle sind und die weitgehend wasserfreie ionische Lösung auf (substituierte) Ammoniumkationen, insbesondere (Mono-, Di-, Tri-, Tetra-)Methylammonium-, (Mono-, Di-, Tri-)Ethylammonium-, n-Propylammonium, Allylammonium-, Propargylammonium-, Ethylendiammonium-, Propylendiammonium-, Hydrazinium-, Guanidinium-, Aminoguanidinium-, 5-Aminotetrazolat-Kationen sowie Nitrat-, Dinitramid-, Perchlorat- und/oder Nitroformatanionen basiert.

10. Monergoler Treibstoff nach Anspruch 9, wobei
die weitgehend wasserfreie ionische Lösung einen nicht flüchtigen, nicht ionischen Zusatz mit einem Siedepunkt von mehr als 150 °C bei 1 bar in Konzentrationen bis maximal 15 Massenprozent aufweist, welcher der Erniedrigung des Schmelzpunktes dient und vorzugsweise aus der Gruppe der Harnstoffe, Guanidine, Formamide, Imidazole, Triazole und Tetrazole stammt.

11. Monergoler Treibstoff nach einem der Ansprüche 9 oder 10, wobei
die weitgehend wasserfreie ionische Lösung suspendierte Brennstoffe aufweist, zu denen vorzugsweise Pulver mit durchschnittlichen Partikelgrößen von weniger als 100 µm gehören, die weiter vorzugsweise aus Aluminium, Aluminiumlegierungen, Magnesium, Magnesiumlegierungen, Bor und Zink bestehen.

12. Verfahren zum Anzünden eines monergolen Treibstoffs nach einem der Ansprüche 9 bis 11 in einer Heißgaserzeugungsvorrichtung nach einem der Ansprüche 1 bis 8, wobei das Verfahren aufweist:
Einleiten eines Massenstroms des monergolen Treibstoffes zwischen die mindestens zwei Elektroden gegensätzlicher Polarität; und
Zersetzen des Treibstoffs des Massenstroms während der Anzündung im elektrischen Feld der Elektroden gegensätzlicher Polarität.

13. Verfahren nach Anspruch 12, wobei
maximal 50% des maximalen Massenstroms des Treibstoffes in der Heißgaserzeugungsvorrichtung zwischen die Elektroden gegensätzlicher Polarität eingeleitet werden.

14. Verfahren nach Anspruch 13, des Weiteren aufweisend:
Erwärmen des monergolen Treibstoffs vor dem Anzünden auf mindestens 20 °C.

## Claims

1. Hot-gas-generating apparatus for reacting a propellant, the hot-gas generating apparatus comprising
a combustion chamber (2);
at least one injector arranged in front of the combustion chamber (2), that injector being able to block the propellant supply towards the combustion chamber (2), and that injector incorporating electrodes (5, 6); and
at least one supply line (1) for the propellant; wherein
the propellant is a monergolic propellant and a substantially anhydrous ionic solution of very low vapor pressure, with a residual water content of less than five percent by mass, and the capability of self-sustained combustion at a given combustion chamber pressure;
the electrodes (5, 6) comprise at least two electrodes of opposite polarity capable of electrically igniting the propellant by an electric current passing through the propellant when the propellant passes between the electrodes of opposite polarity; and
for blocking the propellant supply towards the combustion chamber (2), an automatically sealing injector head (5) is situated between the combustion chamber (2) and the injector, wherein said injector head (5) can only be passed by the propellant above a crack-pressure on the injector side that represents an overpressure relative to the combustion chamber pressure, which causes a sealing effect below the crack-pressure on the injector side.

2. Hot-gas-generating apparatus according to claim 1, wherein
at least one injector head (5) incorporates at least one electrode; and
with the injector closed, the electrodes (5, 6) of opposite polarity are in electrical contact and in sealing contact.

3. Hot-gas-generating apparatus according to one of the preceding claims, wherein
the propellant is present as an ionic solution as it passes between the electrodes of different polarity;
the electrical ignition of this flowing ionic solution takes place in a region of an outlet of the injector; and
a decomposition temperature of the propellant is locally exceeded.

4. Hot-gas-generating apparatus according to one of the preceding claims, further comprising
an actuator for opening and closing the injector that is able to block the propellant supply towards the combustion chamber (2).

5. Hot-gas-generating apparatus according to one of the preceding claims, further comprising
heat pipes for passive cooling of the propellant, wherein the heat pipes are arranged upstream of the combustion chamber (2).

6. Hot-gas-generating apparatus according to one of the preceding claims, wherein
the electrodes (5, 6) have a catalytically active surface which is preferably provided by coating with noble metals, further preferably by coating with copper, silver, platinum, palladium, iridium, rhodium, osmium, ruthenium and rhenium.

7. Hot-gas-generating apparatus according to one of the preceding claims, wherein
an electric potential between the electrodes of 3 to 1000 volts, preferably in the range of 10 to 120 volts, is applied to ignite the propellant.

8. Hot-gas-generating apparatus according to one of the preceding claims, further comprising
an electrically operated pump for delivering the propellant from a propellant tank to the injector; and/or
one or more textile tanks for the propellant supply.

9. Monergolic propellant with at least one soluble catalyst and very low vapor pressure, consisting of a substantially anhydrous ionic solution, with a residual water content of less than five percent by mass, which is capable of self-sustaining combustion at a given pressure,
**characterized in that**
the soluble catalysts are salts and/or complexes of transition metals and the substantially anhydrous ionic solution is based on (substituted) ammonium cations, in particular (mono-, di-, tri-, tetra-)methylammonium-, (mono-, di-, tri-)ethylammonium-, n-propylammonium-, allylammonium-, propargylammonium-, ethylenediammonium-, propylenediammonium-, hydrazinium-, guanidinium-, aminoguanidinium-, 5-aminotetrazolate cations as well as nitrate anions, dinitramide anions, perchlorate anions and/or nitroformate anions.

10. Monergolic propellant according to claim 9, wherein
the substantially anhydrous ionic solution comprises a non-volatile, non-ionic additive with a boiling point of more than 150°C at 1 bar in concentrations of up to a maximum of 15 mass percent, which serves to lower the melting point and preferably belongs to the compound class of ureas, guanidines, formamides, imidazoles, triazoles or tetrazoles.

11. Monergolic propellant according to one of claims 9 or 10, wherein
the substantially anhydrous ionic solution comprises suspended fuels, preferably powders with average particle sizes of less than 100 µm, further preferably made of aluminum, aluminum alloys, magnesium, magnesium alloys, boron and zinc.

12. A method for igniting a monergolic propellant according to one of claims 9 to 11 using a hot-gas-generating apparatus according to one of claims 1 to 8, the method comprising:
passing a mass flow of the monergolic propellant between said at least two electrodes of opposite polarity; and
decomposing the propellant of said mass flow in the electric field of said electrodes of opposite polarity during the ignition.

13. Method according to claim 12, wherein
up to 50% of the maximum propellant mass flow of said hot-gas-generating apparatus is passed between said electrodes of opposite polarity.

14. The method of claim 13, further comprising
heating the monergolic propellant to at least 20 °C before ignition.

## Revendications

1. Dispositif de production de gaz chaud pour la conversion d'un carburant avec
une chambre de combustion (2) ;
au moins un injecteur disposé devant la chambre de combustion (2) et pouvant être fermé côté chambre de combustion pour le carburant, dans lequel des électrodes (5, 6) sont intégrées ; et
au moins une conduite d'alimentation (1) pour le carburant ; dans lequel
le carburant est un carburant monergol et une solution ionique dans une large mesure exempte d'eau à très basse pression de vapeur, avec une teneur en eau résiduelle inférieure à cinq pour cent en masse, laquelle est apte à une combustion auto-entretenue pour une pression de chambre de combustion donnée ;
les électrodes (5, 6) présentent au moins deux électrodes de polarité opposée, qui sont adaptées à allumer électriquement le carburant du fait d'un flux de courant à travers le carburant, lorsque celui-ci circule entre les électrodes de polarité opposée ; et
pour la fermeture côté chambre de combustion de l'injecteur une tête d'injecteur (5) à étanchéité automatique est disposée entre la chambre de combustion (2) et l'injecteur, qui laisse passer le carburant uniquement au-dessus d'une pression d'ouverture côté injecteur, qui représente une surpression par rapport à la pression de chambre de combustion, et ainsi une action d'étanchéité au-dessous de la pression d'ouverture côté injecteur est atteinte.

2. Dispositif de production de gaz chaud selon la revendication 1, dans lequel
au moins une tête d'injecteur (5) reçoit au moins une électrode ; et
lorsque l'injecteur est fermé les électrodes (5, 6) de polarité opposée sont en contact électrique et en contact étanche.

3. Dispositif de production de gaz chaud selon l'une des revendications précédentes, dans lequel
le carburant est présent en tant que solution ionique, pendant qu'il circule entre les électrodes de polarité différente ;
l'allumage électrique de cette solution ionique en circulation a lieu dans la zone d'une ouverture de sortie de l'injecteur ; et
une température de décomposition du carburant est dépassée localement.

4. Dispositif de production de gaz chaud selon l'une des revendications précédentes, en outre avec
un actionneur pour ouvrir et fermer l'injecteur pouvant être fermé côté chambre de combustion pour le carburant.

5. Dispositif de production de gaz chaud selon l'une des revendications précédentes, en outre avec
des caloducs pour le refroidissement passif du carburant, qui sont disposés en amont de la chambre de combustion (2).

6. Dispositif de production de gaz chaud selon l'une des revendications précédentes, dans lequel
les électrodes (5, 6) présentent une surface catalytiquement active, laquelle est fournie de préférence par revêtement avec des métaux nobles, plus préférablement par revêtement avec du cuivre, de l'argent, du platine, du palladium, de l'iridium, du rhodium, de l'osmium, du ruthénium et du rhénium.

7. Dispositif de production de gaz chaud selon l'une des revendications précédentes, dans lequel
pour l'allumage du carburant une différence de potentiel de 3 à 1000 volts, de préférence comprise entre 10 et 120 volts, s'applique entre les électrodes.

8. Dispositif de production de gaz chaud selon l'une des revendications précédentes, en outre avec
une pompe à fonctionnement électrique pour le transport du carburant à partir d'un réservoir de carburant dans l'injecteur ; et/ou
un ou plusieurs réservoirs textiles pour prélever du carburant.

9. Carburant monergol avec au moins un catalyseur soluble et une pression de vapeur très basse, constitué d'une solution ionique dans une large mesure exempte d'eau, avec une teneur en eau résiduelle inférieure à cinq pour cent en masse, laquelle pour une pression donnée est apte à une combustion auto-entretenue,
**caractérisé en ce que**
les catalyseurs solubles sont des sels et/ou complexes des métaux de transition et la solution ionique dans une large mesure exempte d'eau à base de cations ammonium (substitués), en particulier cations (mono-, di-, tri-, tétra-)méthylammonium, (mono-, di-, tri-)éthylammonium, n-propylammonium, allylammonium, propargylammonium, éthylèndiammonium, propylèndiammonium, hydrazinium, guanidinium, aminoguanidinium, 5-aminotetrazolat ainsi que des anions nitrate, dinitramide, perchlorate et/ou nitroformiate.

10. Carburant monergol selon la revendication 9, dans lequel
la solution ionique dans une large mesure exempte d'eau présente un additif non volatil, non ionique avec un point d'ébullition supérieur à 150 °C pour 1 bar dans des concentrations allant jusqu'à maximum 15 pour cent en masse, lequel sert à abaisser le point de fusion et de préférence provient du groupe des urées, guanidines, formamides, imidazoles, triazoles et tétrazoles.

11. Carburant monergol selon l'une des revendications 9 ou 10, dans lequel
la solution ionique dans une large mesure exempte d'eau présente des combustibles en suspension, dont font de préférence partie les poudres avec des tailles de particules moyennes inférieures à 100 µm, qui sont constituées plus préférablement d'aluminium, d'alliages d'aluminium, de magnésium, d'alliages de magnésium, de bore et de zinc.

12. Procédé pour l'allumage d'un carburant monergol selon l'une des revendications 9 à 11 dans un dispositif de production de gaz chaud selon l'une des revendications 1 à 8, dans lequel le procédé présente :
l'introduction d'un flux massique du carburant monergol entre les au moins deux électrodes de polarité opposée ; et
la décomposition du carburant du flux massique pendant l'allumage dans le champ électrique des électrodes de polarité opposée.

13. Procédé selon la revendication 12, dans lequel
au maximum 50 % du flux massique maximal du carburant sont introduits dans le dispositif de production de gaz chaud entre les électrodes de polarité opposée.

14. Procédé selon la revendication 13, présentant en outre :
le chauffage du carburant monergol avant l'allumage à au moins 20 °C.
